Europäisches Patentamt

European Patent Office

Office européen des brevets

(11) Veröffentlichungsnummer: **0 326 660 B1**

(19)

(12) **EUROPÄISCHE PATENTSCHRIFT**

(45) Veröffentlichungstag der Patentschrift: **16.12.92**

(51) Int. Cl.⁵: **B65G 47/26**

(21) Anmeldenummer: **88118703.3**

(22) Anmeldetag: **10.11.88**

(54) Staurollenbahn mit Antrieb über Zwischenrollen.

(30) Priorität: **30.01.88 DE 3802819**

(43) Veröffentlichungstag der Anmeldung:
**09.08.89 Patentblatt 89/32**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**DE-A- 2 214 838**
**DE-U- 8 801 125**
**FR-A- 2 175 983**

(73) Patentinhaber: **Gebhardt Fördertechnik GmbH**
**Postfach 304**
**W-6920 Sinsheim(DE)**

(72) Erfinder: **Gebhardt, Elfriede, geb. Kramer**
**Hans-Thoma-Str. 10**
**W-6920 Sinsheim(DE)**

(74) Vertreter: **Ratzel, Gerhard, Dr.**
**Seckenheimer Strasse 36a**
**W-6800 Mannheim 1(DE)**

## Beschreibung

Die Erfindung betrifft eine Staurollenbahn mit Antrieb über Zwischenrollen zum Fördern und Transportieren von Stückgut.

Die bekannten Staurollenbahnanlagen weisen Zwischenrollen auf, die an einen um die Tragrollenachse schwenkbaren Hebelarm galagert sind. Dabei wird aufgrund der konstruktiven Beschaffenheit dieser Hebel eine kontinuierliche Schwenkbewegung um eine Achse durchgeführt, wobei die Distanz zwischen beiden Rollen stets gleich bleibt.

Es ist hierbei von großer Wichtigkeit, daß die Lage der Zwischenrolle exakt eingestellt wird. Hierbei hat es sich gezeigt, daß der Verschleiß der Zwischenrollen, also eine Dezimierung des Durchmessers, eine Korrektur der Einstellung des Zwischenrades bedarf oder aber die durch die Zwischenrolle wirkende Reibkraft auf die Tragrolle entsprechend geringer wird und sich somit Transportstörungen zeigen. Die ständigen Korrekturarbeiten sind sehr arbeitsaufwendig und kostenintensiv.

Da die Zwischenrollen und deren Gelenkachsen nebst Führungsrolle bei den bekannten Anlagen direkt am Rahmen montiert sind, sind die erforderlichen Wartungsarbeiten nur erschwert auszuführen.

Aus der FR-A-21 75 983 ist eine Staurollenbahn zum staudrucklosen Speichern und Transportieren von Stückgut gemäß dem Oberbegriff des Anspruchs 1 bekannt, bei der dem Verschleiß der Zwischenrolle entgegengetreten werden soll, indem diese gelenkig an Hebelteile befestigt sind,die mit einem Stellmittel korrespondieren. Hierbei wurde der Weg beschrieben, daß ein zweiteiliges Hebelteil verwendet wird, das durch entsprechende Anschläge die zueinander einen Winkel bilden, eine gewisse Beweglichkeit geschaffen wird. Jedoch ist der Verschleiß, den eine solche Zwischenrolle aufweisen darf, derart gering, so daß auch hier nach gewisser Zeit Wartungsarbeiten auszuführen sind. Über das Stellmittel, daß das Hebelgelenk und somit die Zwischenrolle außer Eingriff mit der Tragrolle bringt, darf in dieser Form nicht mit der Achse des Hebelgelenkes verbunden sein, da bei unterschiedlicher Zwischenrollenabnutzung es dazu führen würde, daß die nächste Rollengruppe beeinflußt wird oder aber auch keine Übertragungskraft zwischen Hebelachse und Stellmittel übermittelt werden kann.

Der Erfindung liegt daher die Aufgabe zugrunde, eine Staurollenbahn bereitzustellen, die ein Nachjustieren der Zwischenrollen erübrigt und die Anordnung des Treibmittels und der Zwischenrolle nebst Gelenkhebel so vorsieht, daß eventuelle Wartungsarbeiten unter ergonomischen Gesichtspunkten unbehindert ausgeführt werden können.

Diese Aufgabe wird erfindungsgemäß durch eine Staurollenbahn gemäß des vorgeschlagenen Anspruchs 1 gelöst, wobei besonders bevorzugte Ausführungen bzw. Weiterbildungen der Erfindungen in den Unteransprüchen gekennzeichnet sind.

Anhand der beigefügten Zeichnungen, die ein besonders bevorzugtes Ausführungsbeispiel der Erfindung zeigen, wird diese nun näher erläutert.

Dabei zeigen:

Figur 1  eine perspektivische Darstellung eines Ausschnittes der Staurollenbahn;

Figur 2  einen Längsschnitt entlang der in Figur 1 angedeuteten Schnittlinie A-A, der die Anordnung der Rollen am Rahmen verdeutlicht;

Figur 3  ein Detail einer Tragrolle mit eingreifender Zwischenrolle;

Figur 4  eine Ansicht aus der in Figur 3 angedeuteten Richtung A;

Figur 5  eine Ansicht aus der in Figur 4 angedeuteten Richtung B.

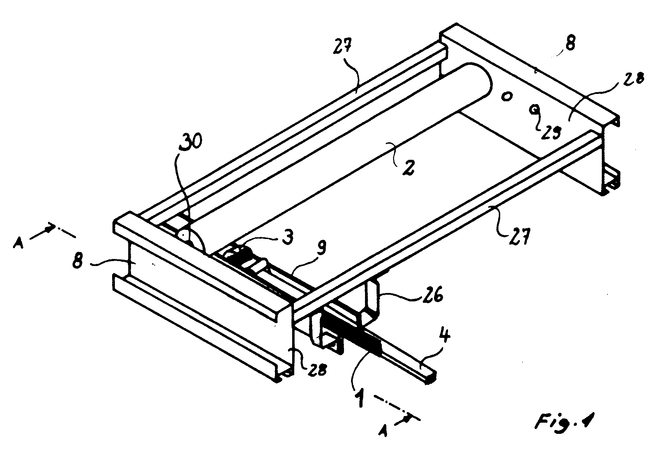

Figur 1 zeigt die perspektivische Darstellung eines Ausschnittes der Staurollenbahn. Zur Verdeutlichung der Anlage ist in dieser Ansicht nur eine Tragrolle 2 zwischen dem U-förmigen Rahmen 8 mit einer Zwischenrolle 3 angedeutet. In der Praxis sind dem Transportweg angepaßt, mehrerer dieser Rollen-Kombinationen hintereinander angeordnet. Die Tragrollen 2 weisen an ihren Stirnseiten je eine Achse 30 auf, mit denen sie in den Lochungen 29 der Rahmen 8 drehbar gelagert sind.

Ein über einen Motor bewegtes Treibmittel 4, das vorzugsweise aus einem Keilriemen o. ä. besteht, wird die Zwischenrolle 3 ständig in Drehbewegung gehalten. Über einen hier nicht näher beschriebenen Fühler, der durch das Transportgut aktiviert wird, wird das Stellglied 1 in oder gegen die Transportrichtung bewegt und setzt dabei die Zwischenrollen 3 in Arbeits- oder Ruhestellung.

Die Zwischenrollen 3 sind zwischen zwei parallel zum Rahmen verlaufenden Schienen 9 gelagert, die mittels Haltebügeln 26 an den parallel zu den Tragrollen 2 angeordneten Querträgern 27 befestigt sind.

Figur 2 zeigt einen Längsschnitt durch die Staurollenbahn, entlang der in Figur 1 angedeuteten Schnittlinie A-A. Es wird hierbei die Anordnung mehrerer hintereinander liegender Rollenpaare gezeigt.

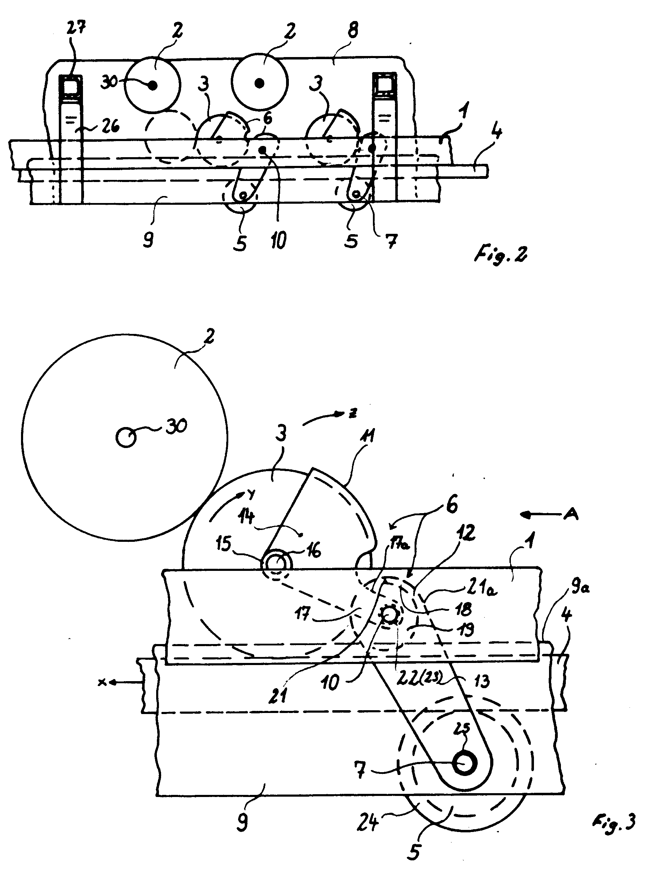

Figur 3 verdeutlicht das Zusammenspiel zwischen Tragrollen 2 und Zwischenrollen 3. Wie bereits beschrieben wird ein Keilriemen o. ä. Treibmittel 4 über ein Antriebsaggregat in die Transportrichtung "x" bewegt und treibt dabei ständig die Zwischenrolle 3 nach "y" an. Die Zwischenrolle 3 weist eine mit dem Hebelgelenk 6 gemeinsame Achse 16 auf. Das Hebelgelenk 6 besteht aus zwei Teilen. Ein gehäuseähnlische Hebelteil 11 in Form eines Viertelkreises, das die Zwischenrolle 3 teilweise umgibt.

Die Wandungen 14 des Gehäuseteils 11 weisen beidseitig eine Erhebung 15 auf, durch die die gemeinsame Drehachse 16 mit der Zwischenrolle 3 führt.

Ausgehend von den Erhebungen 15 ragen hebelförmige Arme 17 zur Gelenkachse 10.

Bei einer Kippbewegung der Zwischenrolle 3 um die Achse 10 nach "z" stößt die Oberfläche 17a der Hebelarme 17 an die Nasen 21 innerhalb der Aussparung 18 am Gelenkstück 12, so daß ein Überschlagen der Zwischenrolle 3 verhindert wird.

Von beiden Seiten aus, des zylindrischen Gelenkstücks 12 führen angeformte Hebelarme 13 zur Achse 7 der Führungsrolle 5.
Durch diese Anordnung ist das Schwenken des gesamten Hebelgelenkes 6 um die Achse 7 möglich. Die Schwenkbewegungn ist durch das Anschlagen der Unterkante 21a der Zylinderwand auf der Oberfläche 9a der Schiene 9 begrenzt.

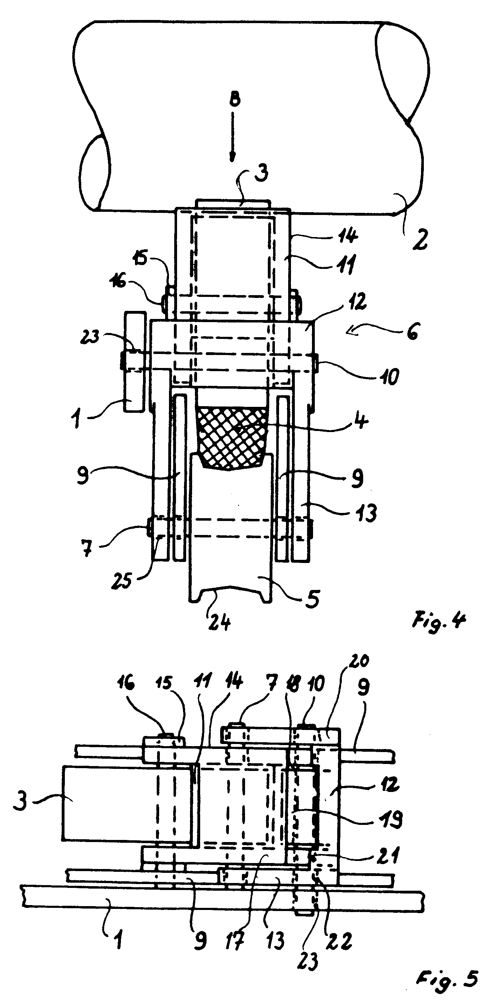

Figur 4 zeigt die Ansicht der Rollenpaare, aus der in Figur 3 angedeuteten Richtung A im Eingriff mit der Tragrolle 2. Es sind dabei die Achsen 16 der zwischenrolle 3, die Gelenkachse 10 und die Achse 7 der Führungsrolle 5 erkennbar. Die Rollenpaare sind im Eingriff, wenn das Treibmittel 4, vorzugsweise ein Keilriemen,die Zwischenrolle 5 bewegt und diese die Tragrolle 2 antreibt, wobei das Stellglied 1 das Hebelgelenk 6, d.h. die Gelenkteile 11 und 12 in Arbeitsstellung setzt. Die Führungrolle 5 weist eine, der Form des Keilriemens 4 angepaßte Eindrehung 24 auf.

Figur 5 zeigt eine Ansicht der Gelenkteile aus der in Figur 4 angedeuteten Richtung B, jedoch zur Verdeutlichung nicht in der Arbeitsstellung um den Innenzylinder 19 des zylindrischen Gelenkstückes 12 erkennbar zu zeigen.

Die Gesamtheit der konstruktiven Anordnung der Führungsrolle, Zwischenrolle und Tragrolle mit derenschwenkbaren Hebelgelenken läßt eine Verbesserung der Staurollenbahnen erkennen und stellt eine Vorrichtung bereit, die das Stückgut selbststeuernd über die Rollenbahn führt und ständige Justierungen durch Verschleiß der Zwischenrollen erübrigt.

## Bezugzeichenliste

| | |
|---|---|
| 1 | Stellglied |
| 2 | Tragrollen |
| 3 | Zwischenrolle |
| 4 | Treibmittel |
| 5 | Führungsrolle |
| 6 | Hebelgelenk |
| 7 | Achse der Führungsrolle |
| 8 | Rahmen |
| 9 | Schienen |
| 9a | Schienenoberkante |
| 10 | Gelenkachsen |
| 11 | Gehäuseteil des Hebelgelenks |
| 12 | zylindrisches Gelenkstück des Hebelgelenks |
| 13 | Hebelarme des Gelenkstücks |
| 14 | Wandungen des Gehäuseteils am Hebelgelenk |
| 15 | Erhebungen an Wandung des Hebelgelenks |
| 16 | Achse der Zwischenrolle |
| 17 | hebelförmige Arme an Wandung |
| 17a | Oberfläche der Hebelarme (Anschlag) |
| 18 | halbseitige Aussparung an Gelenkstück |
| 19 | Innenzylinder |
| 20 | Wandung |
| 21 | Anschlagnasen |
| 21a | Unterkante der Zylinderwand |
| 22 | Bohrung für Gelenkachse |
| 23 | Bohrungen im Stellglied |
| 24 | Eindrehung in Führungsrolle |
| 25 | Bohrung |
| 26 | Haltebügel |
| 27 | Querträger |
| 28 | Steg des Rahmenprofils |
| 29 | Sechskantlochungen |
| 30 | Achse der Tragrolle |

## Patentansprüche

1. Staurollenbahn zum staudrucklosen Speichern und Transportieren von Stückgut, bestehend aus das Stückgut tragenden, quer zur Transportrichtung drehbar in einem Rahmen (8) gelagerten Tragrollen (2), die mit Zwischenrollen (3) in eine Eingriffs- oder Ruhestellung bringbar sind, indem die Zwischenrollen (3) mit einem ständig im Umlauf befindlichen Treibmittel (4) antriebsmäßig verbindbar sind und die Positionierung der Zwischenrollen (3) in eine Eingriffs- oder Ruhestellung über ein Stellglied (1) erfolgt, das über einen, in die Bahn des Transportgutes einragenden Fühler aktiviert wird und die Zwischenrollen (3) jeweils in oder an einem zweiteiligen Gelenkhebel (6) drehbar gelagert sind, welcher aus einem oberen (11) und unteren (12) Hebelteil besteht, welche mittels einer gemeinsamen Achse (10) mit dem Stellglied (1) in Verbindung stehen, wodurch das zweiteilige Hebelgelenk (6) derart umgestellt werden kann, das die Tragrollen (2) und die Zwischenrollen (3) zueinander in Ruhe- und Eingriffsstellung bringbar sind, dadurch gekennzeichnet, daß das obere Hebelteil (11) aus einem die Zwischenrolle (3) tragenden und diese teilweise umgebenden Gehäuse (11) und das untere Hebelteil aus einem zylinderförmigen, parallel zur gemeisamen Achse (10) angeordneten, mit Hebelarmen 13 versehenen Gelenkstück 12 besteht, und daß weiterhin die Hebelarme 13 des unteren Hebelteils drehbar an zwei parallel zum Rahmen 8 verlaufenden Schienen 9 gelagert sind.

2. Staurollenbahn mit Antrieb über Zwischenrollen nach Anspruch 1,
dadurch gekennzeichnet,
daß das Gehäuseteil (11) des Hebelgelenkes (6) an seinen Wandungen (14) Erhebungen (15) aufweist,
in denen die gemeinsame Achse (16) mit der Zwischenrolle (3) angeordnet ist und die Wandung(14) zwei zur Gelenkachse (10) ragende Hebelarme (17) aufweist, die an der Gelenkachse (10) drehbar gelagert sind, wobei die Oberfläche (17a) der Hebelarme als Anschlag fungieren.

3. Staurollenbahn mit Antrieb über Zwischenrollen nach Anspruch 1 - 2,
dadurch gekennzeichnet,
daß das zylinderförmige Gelenkstück (12) eine halbseitige Aussparung (18) sowie eine durch den Innenzylinder (19) und Wandung (20) durchführende, die Gelenkachse (10) aufnehmenden Bohrung (22) aufweist, wobei die Wandungen (20) in je einen Hebelarm (13) übergehen, die gemeinsam mit der Führungsrolle (5) an den Schienen (9) schwenkbar bzw. drehbar gelagert sind.

4. Staurollenbahn mit Antrieb über Zwischenrollen, nach Anspruch 1 - 3,
dadurch gekennzeichnet,
daß das zylindrische Gelenkstück (12) im Bereich seiner Aussparung (18) zwei Anschlagnasen (21) aufweist.

5. Staurollenbahn mit Antrieb über Zwischenrollen nach Anspruch 1 - 4,
dadurch gekennzeichnet,
daß das Stellglied (1) mit,die Gelenkachsen (10) aufnehmenden Bohrungen (23) versehen ist.

6. Staurollenbahn mit Antrieb über Zwischenrollen nach Anspruch 1 - 5,
dadurch gekennzeichnet,
daß die Führungsrollen (5) mit einer der Form des Treibmittels (4) angepaßten Eindrehung (24) versehen ist.

7. Staurollenbahn mit Antrieb über Zwischenrollen nach Anspruch 1 - 6,

dadurch gekennzeichnet,
daß in den die Führungsrollen (5) aufnehmenden Schienen (9) für die gemeinsame Schwenkachse (7) des Gelenkstückes (12) und der Führungsrollen (5) aufnehmende Bohrungen (25) angeordnet sind.

8. Staurollenbahn mit Antrieb über Zwischenrollen nach Anspruch 1 - 7,
dadurch gekennzeichnet,
daß die Schienen (9) mittels Haltebügel (26) an den quer zur Transportrichtung und parallel zu den Tragrollen (2) angeordneten Querträgern (27) befestigt sind.

9. Staurollenbahn mit Antrieb über Zwischenrollen nach Anspruch 1 - 8,
dadurch gekennzeichnet,
daß die Rahmenprofile (8) U-förmig ausgebildet sind und in ihren Stegen (28) mit Sechskantlochungen (29) versehen ist, die die Tragrollen (2) bzw. die Querträger (27) aufnehmen.

**Claims**

1. An accumulator-type roller conveyor for the storage and conveyance of packages without ramming pressure, comprising carrier rollers (2) which carry the packages, which are mounted rotatably in a frame (8) transversely to the conveying direction and which can be brought into an engagement or rest position with intermediate rollers (3), by the intermediate rollers (3) being able to be connected for drive purposes with a continuously rotating drive means (4) and the positioning of the intermediate rollers (3) in an engagement or rest position being effected by way of a control member (1) which is actuated by way of a sensor projecting into the path of the goods being conveyed and the intermediate rollers (3) are each mounted rotatably in or on a two-part toggle joint (6) comprising an upper lever part (11) and a lower lever part (12), which are connected with the control member (1) by means of a common shaft (10), whereby the two-part toggle joint (6) can be shifted in such a way that the carrier rollers (2) and the intermediate rollers (3) can be brought into the engagement and rest position relative to one another, characterised in that the upper lever part (11) comprises a housing (11), which supports and partly surrounds the intermediate roller (3), and the lower lever part comprises a cylindrical hinge member (12) disposed parallel to the common shaft (10) and provided with lever arms (13), and in that, additionally, the lever arms (13) of the lower lever part are mounted rotatably on two rails (9) extending parallel to the frame (8).

2.   An accumulator-type roller conveyor with drive via intermediate rollers according to Claim 1, characterised in that the housing part (11) of the toggle joint (6) has on its walls (14) thickened portions (15), in which is disposed the common shaft (16) with the intermediate roller (3) and the wall (14) has two lever arms (17) which project towards the hinge shaft (10) and which are mounted rotatably on the hinge shaft (10), the surface (17a) of the lever arms acting as an abutment.

3.   An accumulator-type roller conveyor with drive via intermediate rollers according to Claims 1 to 2, characterised in that the cylindrical hinge member (12) has on one side a recess (18) and a bore (22) which passes through the inner cylinder (19) and the wall (20) and which accommodates the hinge shaft (10), wherein the walls (20) each merge into a lever arm (13), which together with the guide roller (5) are mounted pivotably or rotatably on the rails (9).

4.   An accumulator-type roller conveyor with drive via intermediate rollers according to Claims 1 to 3, characterised in that in the vicinity of its recess (18) the cylindrical hinge member (12) has two abutment dogs (21).

5.   An accumulator-type roller conveyor with drive via intermediate rollers according to Claims 1 to 4, characterised in that the control member (1) is provided with bores (23) accommodating the hinge shafts (10).

6.   An accumulator-type roller conveyor with drive via intermediate rollers according to Claims 1 to 5, characterised in that the guide rollers (5) are each provided with a groove (24) adapted to the shape of the drive means (4).

7.   An accumulator-type roller conveyor with drive via intermediate rollers according to Claims 1 to 6, characterised in that bores (25) are provided in the rails (9) accommodating the guide rollers (5) for the common pivot axis (7) of the hinge member (12) and the guide rollers (5).

8.   An accumulator-type roller conveyor with drive via intermediate rollers according to Claims 1 to 7, characterised in that the rails (9) are secured by means of retaining straps (26) to the cross members (27) disposed transversely to the conveying direction and parallel to the carrier rollers (2).

9.   An accumulator-type roller conveyor with drive via intermediate rollers according to Claims 1 to 8, characterised in that the frame profiles (8) are U-shaped and their webs (28) are provided with hexagonal holes (29) which accommodate the carrier rollers (2) and/or the cross members (27).

**Revendications**

1.   Transporteur d'accumulation à rouleaux pour stocker et transporter des colis sans pression d'accumulation, constitué de rouleaux porteurs (2) qui portent le colis, sont montés dans un bâti (8) à rotation transversalement à la direction de transport et peuvent être amenés dans une position de repos ou d'engagement avec des rouleaux intermédiaires (3), par le fait que les rouleaux intermédiaires (3) peuvent être reliés en entraînement à un moyen d'entraînement (4) se trouvant constamment en circulation et que le positionnement des rouleaux intermédiaires (3) dans une position d'engagement ou de repos s'effectue par l'intermédiaire d'un organe de commande (1) qui est activé par l'intermédiaire d'un capteur pénétrant dans la voie de déplacement du colis transporté, et que les rouleaux intermédiaires (3) sont chacun montés à rotation dans ou sur un levier d'articulation (6) en deux parties qui est constitué d'une partie de levier supérieure (11) et inférieure (12), qui peuvent être reliés à l'organe de commande (1) au moyen d'un axe commun (10), de sorte que l'articulation à levier (6) en deux parties peut être manoeuvrée de telle sorte que les rouleaux porteurs (2) et les rouleaux intermédiaires (3) peuvent être amenés en position de repos et en position d'engagement mutuel,
    **caractérisé** en ce que la partie de levier supérieure (11) est constituée d'un carter (11) portant le rouleau intermédiaire (3) et l'entourant partiellement, et la partie de levier inférieure d'une pièce d'articulation cylindrique (12), disposée parallèlement à l'axe commun (10) et dotée de bras de levier (13), et en ce que les bras de levier (13) de la partie de levier inférieure sont en outre montés à rotation sur deux glissières (9) s'étendant parallèlement au bâti (8).

2.   Transporteur d'accumulation à rouleaux à entraînement par rouleaux intermédiaires selon la revendication 1,
    **caractérisé** en ce que la partie de carter (11) de l'articulation à levier (6) présente, sur ses parois (14), des bossages (15) dans lesquels est disposé l'axe commun (16) muni du rouleau intermédiaire (3), et la paroi (14) présente deux bras de levier (17) qui dépassent vers l'axe d'articulation (10) et sont montés à rotation sur l'axe d'articulation (10), les surfaces (17a) des bras de levier jouant le rôle de butée.

3. Transporteur d'accumulation à rouleaux à entraînement par rouleaux intermédiaires selon la revendication 1 ou 2,
caractérisé en ce que la pièce d'articulation cylindrique (12) présente un évidement (18) sur un demi-côté ainsi qu'un perçage (22) traversant le cylindre intérieur (19) et la paroi (20) et recevant l'axe d'articulation (10), les parois (20) se raccordant chacune à un bras de levier (13) et les bras de levier (13) étant montés, conjointement avec le rouleau de guidage (5), à rotation ou à pivotement sur les glissières (9).

4. Transporteur d'accumulation à rouleaux à entraînement par rouleaux intermédiaires selon l'une des revendications 1 à 3,
caractérisé en ce que la pièce d'articulation cylindrique (12) présente deux ergots de butée (21) dans la région de son évidement (18).

5. Transporteur d'accumulation à rouleaux à entraînement par rouleaux intermédiaires selon l'une des revendications 1 à 4,
caractérisé en ce que l'organe de commande (1) est pourvu de perçages (23) recevant les axes d'articulation (10).

6. Transporteur d'accumulation à rouleaux à entraînement par rouleaux intermédiaires selon l'une des revendications 1 à 5,
caractérisé en ce que les rouleaux de guidage (5) sont dotés d'une gorge (24) tournée dans la masse, adaptée à la forme du moyen d'entraînement (4).

7. Transporteur d'accumulation à rouleaux à entraînement par rouleaux intermédiaires selon l'une des revendications 1 à 6,
caractérisé en ce que des perçages (25), recevant l'axe de pivotement commun (7) de la pièce d'articulation (12) et des rouleaux de guidage (5), sont disposés dans les glissières (9) recevant les rouleaux de guidage (5).

8. Transporteur d'accumulation à rouleaux à entraînement par rouleaux intermédiaires selon l'une des revendications 1 à 7,
caractérisé en ce que les glissières (9) sont fixées, au moyen d'étriers de fixation (26), à des éléments porteurs transversaux (27) disposées transversalement à la direction de transport et parallèlement aux rouleaux porteurs (2).

9. Transporteur d'accumulation à rouleaux à entraînement par rouleaux intermédiaires selon l'une des revendications 1 à 8, caractérisé en ce que les profilés de bâti (8) sont configurés en U et sont munis, dans leurs branches (28), de perçages hexagonaux (29) recevant les rouleaux porteurs (2) ou les éléments porteurs transversaux (27).

Fig.1

Fig. 2

Fig. 3

Fig. 4

Fig. 5